# EUROPEAN PATENT APPLICATION

(11) **EP 4 682 697 A1**
(43) Date of publication of application: **21.01.2026**
(21) Application number: 24770016.4
(22) Date of filing: 14.03.2024
(51) Int. Cl.: G06F 3/04886

(54) **SPLIT-SCREEN DISPLAY METHOD AND APPARATUS, AND DISPLAY, TERMINAL DEVICE AND STORAGE MEDIUM**

(30) Priority: 14.03.2023 CN 202310249170
(71) Applicant: Guangzhou Shiyuan Electronic Technology Company Limited, Guangzhou, Guangdong 510530 (CN); Guangzhou Shiyuan Innovation Technology Co., Ltd, Guangzhou, Guangdong 510700 (CN)
(72) Inventor: CHEN, Xinjie, Guangzhou, Guangdong 510530 (CN)
(74) Representative: Winter, Brandl - Partnerschaft mbB
(86) International application number: PCT/CN2024/081788
(87) International publication number: WO 2024/188326

(57) **Abstract**

The present disclosure discloses a split-screen display method, apparatus, display, terminal device and storage medium. The method includes receiving a split-screen display instruction, where the split-screen display instruction includes split-screen mode information and display information, the display information is used to determine a data source of content displayed in a sub-window; and dividing a display window into a main window and a sub-window based on the split-screen display instruction, where the main window includes an internal data channel window of the display, and the sub-window includes an external data channel window of the display. In this way, the display can not only display the internal data of the display through the internal data channel, but also display the external data of other terminal devices through the external data channel, and at the same time realize split-screen display of internal data and external data, thereby increasing the diversity of the display content, meeting the user demand for split-screen display of the external data of the display, facilitating user operation, and improving the experience of the user.

## Description

The present disclosure claims a priority to Chinese Patent Application No. 202310249170.2, entitled "SPLIT-SCREEN DISPLAY METHOD AND APPARATUS, AND DISPLAY, TERMINAL DEVICE AND STORAGE MEDIUM" and filed with CNIPA on March 14, 2023, the entire contents of which are incorporated herein by reference.

### TECHNICAL FIELD

The present disclosure relates to the technical field of terminal devices, and in particular to a split-screen display method, apparatus, display, terminal device and storage medium.

### BACKGROUND

With the development of science and technology, terminal devices have been used more and more widely. At the same time, people have higher and higher requirements on the functions of terminal devices, such as split-screen display function.

Generally, split-screen display divides the same display screen into two display areas, and each display area displays its own content. In the current split-screen mode, the display may only display the contents related to an internal applications installed on the display through an internal data channel.

For users, the content displayed on the display lacks diversity and cannot meet their needs.

### SUMMARY

The present disclosure provides a split-screen display method, apparatus, display, terminal device and storage medium to increase the diversity of display content on the display, improve the convenience of display content on the display, and enhance the user experience.

According to a first aspect, an embodiment of the present disclosure provides a split-screen display method, the method includes:
receiving a split-screen display instruction, where the split-screen display instruction includes split-screen mode information and display information, the display information is used to determine a data source of content displayed in a sub-window; and
dividing a display window into a main window and a sub-window based on the split-screen display instruction, where the main window includes an internal data channel window of a display, and the sub-window includes an external data channel window of the display.

Optionally, the sub-window further includes the internal data channel window of the display.

Optionally, the split-screen display instruction further includes: audio source information;
taking an audio source of the main window or the sub-window as an output audio source based on the audio source information.

Optionally, the split-screen mode information includes a PBP mode and a PIP mode;
dividing evenly the display window into a main window and a sub-window when the split-screen mode information is the PBP mode, where the main window has a same size as the sub-window; and
dividing the display window into a main window and a sub-window when the split-screen mode information is the PIP mode, where the main window has a different size from the sub-window, and the size of the main window is larger than the size of the sub-window.

Optionally, when the split-screen mode information is the PIP mode, the split-screen display instruction further includes: sub-window size information and sub-window position information;
determining a size of the sub-window based on the sub-window size information; and
determining a position of the sub-window based on the sub-window position information.

Optionally, the method further includes:
receiving a focus switching instruction; and
switching the main window or the sub-window as a target window based on the focus switching instruction.

Optionally, the method further includes:
receiving a display switching instruction; and
switching a target data source of the sub-window based on the display switching instruction.

According to a second aspect, an embodiment of the present disclosure provides a split-screen display apparatus, the apparatus includes:
a receiving module configured to receive a split-screen display instruction, where the split-screen display instruction includes split-screen mode information and display information, the display information is used to determine a data source of content displayed in a sub-window; and
a dividing module configured to divide a display window into a main window and a sub-window based on the split-screen display instruction, where the main window includes an internal data channel window of a display, and the sub-window includes an external data channel window of the display.

Optionally, the sub-window further includes the internal data channel window of the display.

Optionally, the split-screen display instruction further includes: audio source information;
taking an audio source of the main window or the sub-window as an output audio source based on the audio source information.

Optionally, the split-screen mode information includes a PBP mode and a PIP mode;
the dividing module is further configured to divide evenly the display window into a main window and a sub-window when the split-screen mode information is the PBP mode, where the main window has a same size as the sub-window;
the dividing module is further configured to divide the display window into a main window and a sub-window when the split-screen mode information is the PIP mode, where the main window has a different size from the sub-window, and the size of the main window is larger than the size of the sub-window.

Optionally, when the split-screen mode information is the PIP mode, the split-screen display instruction further includes: sub-window size information and sub-window position information;
the dividing module is further configured to determine a size of the sub-window based on the sub-window size information;
the dividing module is further configured to determine a position of the sub-window based on the sub-window position information.

Optionally, the apparatus further includes:
the receiving module further configured to receive a focus switching instruction; and
a switching module configured to switch the main window or the sub-window as a target window based on the focus switching instruction.

Optionally, the apparatus further includes:
the receiving module further configured to receive a display switching instruction; and
the switching module further configured to switch a target data source of the sub-window based on the display switching instruction.

According to a third aspect, an embodiment of the present disclosure provides a display, which includes: a processor, a memory, and a computer program stored in the memory and executable on the processor, where when the processor executes the computer program, the display performs the method described in the first aspect above.

In a fourth aspect, an embodiment of the present disclosure provides a terminal device, which includes the display as described in the third aspect.

In a fifth aspect, an embodiment of the present disclosure provides a computer-readable storage medium, in which computer instructions are stored, when the computer instructions are executed by a processor, the computer instructions are used to perform the method described in the first aspect above.

In the above technical solution, when a split-screen display instruction is received, the display divides the display window into a main window and a sub-window based on the split-screen display instruction, where the main window includes an internal data channel window of a display, and the sub-window includes an external data channel interface of the display. In this way, the display can not only display the internal data of the display through the internal data channel, but also display the external data of other terminal devices through the external data channel, and at the same time realize split-screen display of internal data and external data, thereby increasing the diversity of the display content, meeting the user demand for split-screen display of the external data of the display, facilitating user operation, and improving the experience of the user.

### BRIEF DESCRIPTION OF DRAWINGS

In order to more clearly illustrate the technical solutions in the embodiments of the present disclosure, the drawings required for use in the description of the embodiments will be briefly introduced below. Obviously, the drawings described below are only some embodiments of the present disclosure. For those skilled in the art, other drawings may be obtained based on these drawings without creative work.
FIG. 1 is a flowchart of a split-screen display method according to an embodiment of the present disclosure.
FIG. 2 is a schematic diagram of a split-screen mode according to an embodiment of the present disclosure.
FIG. 3 is a schematic diagram of another split-screen mode according to an embodiment of the present disclosure.
FIG. 4 is a block diagram of a split-screen display apparatus according to an embodiment of the present disclosure.
FIG. 5 is a block diagram of another split-screen display apparatus according to an embodiment of the present disclosure.
FIG. 6 is a schematic diagram of a structure of a display according to an embodiment of the present disclosure.

### DESCRIPTION OF EMBODIMENTS

In order to make the objects, technical solutions and advantages of the present disclosure clearer, the implementation manners of the present disclosure will be further described in detail below with reference to the accompanying drawings.

Split-screen display divides a same display screen into two display areas, each display area displays its own content. In a current split-screen mode, the display may only display the contents related to the installed internal applications on the screen through an internal data channel of a display. However, if other terminal devices are connected externally, when a content on the other terminal devices is displayed on the display through an external data channel, the content of the terminal device may usually only be displayed in full screen, and cannot be displayed on the same screen or split screen with the application inside the display. It is also difficult to control the audio output source of the display, and it is impossible to freely switch the focus of the display. For users, the content displayed on the display lacks diversity and cannot meet their needs.

Based on this, the embodiments of the present disclosure provide a split-screen display method, apparatus, display, terminal device and storage medium, which can display the contents of an external data channel and the contents of an internal data channel on the same screen of the display, and freely switch the focus in each split screen and select the audio output source played by the display. This can increase the diversity of content displayed on the display, meet user needs, and improve user experience.

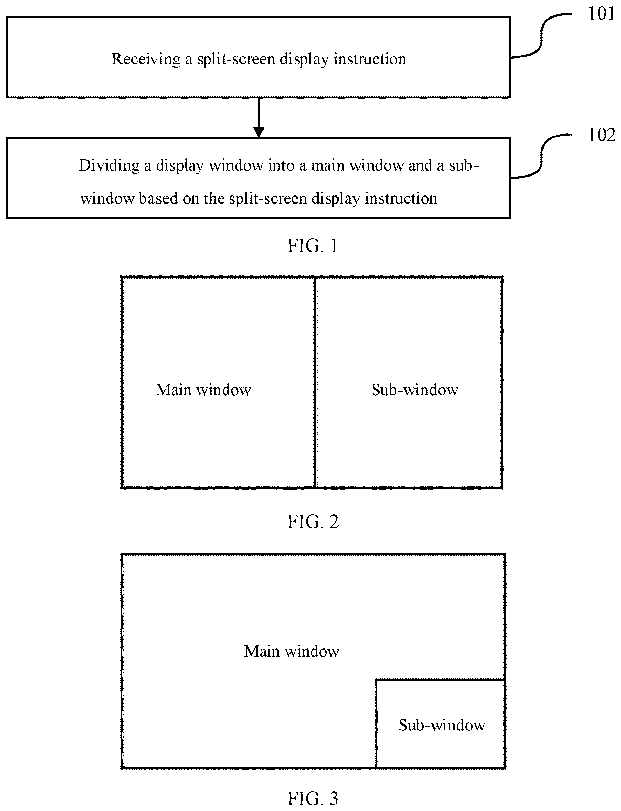

In this embodiment, a split-screen display method is provided. FIG. 1 is a flowchart of a split-screen display method according to an embodiment of the present disclosure. As shown in FIG. 1, the method may include the following steps:

S101, receiving a split-screen display instruction.

The split-screen display instruction may include split-screen mode information and display information, and the display information may be used to determine a data source of content displayed in a sub-window.

The data source may include internal data of the display and external data of the display. The internal data of the display may include data of various applications installed in the system of the display, and the external data of the display may include various data on an external terminal device connected to the display. Various control instructions for the display, such as split-screen display instructions, may be transmitted via a remote control device, such as a remote controller, or may be transmitted via a physical button or a virtual button on the display.

For example, the system of the display may be Android system, or other systems, such as an IOS system, Windows system, etc. In this embodiment, the display system is Android system. Android system allows multiple applications to share one screen at the same time, and may control each application to be displayed in a movable window with adjustable display size through ***ControlService.*** Specifically, the split-screen mode, window size, window position, data source, audio source information and other information may be pre-set, and then the specific split-screen display effect and display content may be determined based on the selection of this information by the user when splitting the screen. In this embodiment, Android system is taken as an example to illustrate the method of the present disclosure by transmitting various control instructions to the display through a remote control device. ***ControlService*** refers to a service manager, that is, a control center of Android system. Users may use ***ControlService*** to implement various control operations on the display. For example, in the present disclosure, users may transmit various corresponding control instructions to ***ControlService*** to implement various control operations on the split screen of the display and the main window and sub-windows after the split screen.

S102: dividing a display window into a main window and a sub-window based on the split-screen display instruction.

The main window may include the internal data channel window of the display, and the sub-window may include the external data channel window of the display.

The internal data channel window of the display is a window for displaying the internal data of the display, and is configured to display contents of various applications installed in the display system, for example, it may be a window for displaying applications such as browsers and players. The display external data channel window is a window for displaying external data of the display, for example, it may be a window for displaying other external terminal devices connected to the display.

When the display is in power-on state, the display displays a power-on page. At this time, after receiving the split-screen display instruction transmitted by the remote control device, the display divides the display window into a main window and a sub-window based on the split-screen display instruction. The user may then continue to use the remote control device to start the application of the internal data of the display, and display the content of the application in the main window of the display through the internal data channel. The user may also use the remote control device to start the external data of the display, and display the content of the external terminal device in the sub-window of the display through an external data channel (such as HDMI interface). Both the main window and the sub-window may be moved and resized. It may be understood that the user may transmit a split-screen display instruction to the display after the display is turned on (power-on page), and may also transmit a split-screen display instruction to the display at any time as needed while the display is normally displaying internal data or external data. In this case, the content currently displayed by the display is automatically used as the content displayed by the main window (the content currently displayed is internal data) or the sub-window (the data currently displayed is external data), and the user only needs to start and select the content displayed in the other window. In this way, the display may not only display the internal data of the display through the internal data channel, but also display the external data of other terminal devices through the external data channel, and at the same time realize split-screen display of internal data and external data, thereby increasing the diversity of the display content, meeting the user demand for split-screen display of the external data of the display, facilitating user operation, and improving the user experience.

In the present disclosure, ***ControlService*** may independently control the main window and the sub-window, that is, the main window and the sub-window may not have a direct control relationship. For example, when the display window of the display completes the split screen, ***ControlService*** may independently transmit instructions to the sub-window to switch the target data source of the sub-window.

It is understandable that ***ControlService*** may also only transmit control instructions to the main window, the main window then transmits the control instructions to the sub-window, and the sub-window performs the corresponding operations. That is, the main window and the sub-window may also have a control relationship. For example, when determining the output audio source, ***ControlService*** may transmit the control instruction of "an audio source of the main window is turned off, an audio source of the sub-window is turned on" to the main window, and then the main window controls its own audio source to turn off, and transmits the control instruction to the sub-window, so that the sub-window controls its own audio source to turn on.

In a possible embodiment, the sub-window may further include the internal data channel window of the display, so that the display may display various applications installed in the display system in split screens, realize split-screen display of the display internal data, and meet the user demand for split-screen display of the internal data of the display.

When the display window of the display completes the split screen, the user may continue to set an output audio source, a split-screen mode, focus switching, and sub-window size information, position information, and display switching information of the display. At this time, these setting information may be displayed on the main screen so that the user can intuitively view the selected operation content.

In a possible embodiment, the split-screen display instruction further includes: audio source information;

Taking an audio source of the main window or the sub-window as an output audio source based on the audio source information.

The output audio source refers to the audio source played on the display screen, for example, it may be the audio source of the main window or the audio source of the sub-window. For example, the audio source information may be determined through ***Audio*** option of ***ControlService*** or a similar function, and the audio source information may include first audio source information or second audio source information. For example, the audio source information may be transmitted via a remote control device.

After receiving the display switching instruction, the display may obtain the audio source information contained in the display switching instruction, and then determine an audio track input to the display based on the audio source information, so as to determine the output audio source. If the audio source information received by the display is the first audio source information, the audio track input by the display is determined to be the audio track of the main window, so as to determine the output audio source to be the audio source of the main window, and the display may directly control the audio source of the main window to be turned on; if the audio source information received by the display is the second audio source information, the audio track input by the display is determined to be an audio track of the sub-window, so as to determine the output audio source to be the audio source of the sub-window, and the display may directly control the audio source of the sub-window to be turned on, or the control information of turning on the audio source of the sub-window is transmitted to the main window, and the main window transmits the control information to the sub-window, thereby controlling the audio source of the sub-window to be turned on.

When the display is in split-screen display, the display contents of the main window and the sub-window may have different audio sources, causing the two windows to emit audio at the same time and interfere with each other. Therefore, when transmitting a split-screen display instruction, the user may also select the corresponding audio source information and use the audio source of the main window or sub-window as the output audio source. In this way, it is avoided that the audio sources of the sub-window and the main window are output at the same time, causing confusion in the display output.

In a possible embodiment, the split-screen mode information may include a PBP mode and a PIP mode;
dividing evenly the display window into a main window and a sub-window when the split-screen mode information is the PBP mode, where the main window has a same size as the sub-window; and
dividing the display window into a main window and a sub-window when the split-screen mode information is the PIP mode, where the main window has a different size from the sub-window, and the size of the main window is larger than the size of the sub-window.

The split-screen mode information may include a PBP mode (Picture by Picture, dual-picture display mode). In the PBP mode, the display window of the display is divided into two windows of the same size. As shown in FIG. 2, the display window of the display is vertically divided into a main window and a sub-window. The main window and the sub-window are located on the left and right sides of the display window respectively, and the main window has a same size as the sub-window. It is understandable that in actual applications, the display window of the display may also be divided horizontally, that is, the main window and the sub-window are located at the upper and lower portions of the display window respectively, and this application does not make any specific limitation here.

The split-screen mode information may further include a PIP mode (Picture in Picture, picture-in-picture display mode). As shown in FIG. 3, the sub-window is located in a corner of the display window, the main window has a different size from the sub-window, and the size of the main window is larger than the size of the sub-window. For example, the corresponding split-screen mode may be determined through ***PBP*/*PIP Mode*** option in ***ControlService*** or similar functions. In this way, when a split-screen display instruction is received, corresponding split-screen operations may be performed on the display window of the display based on different split-screen mode information contained in the split-screen display instruction, thereby meeting various needs of users facing different application scenarios.

In a possible embodiment, when the split-screen mode information is the PIP mode, the split-screen display instruction further includes: sub-window size information and sub-window position information;
determining a size of the sub-window based on the sub-window size information; and
determining a position of the sub-window based on the sub-window position information.

For example, the position information and size information of the sub-window may be preset. The sub-window position information may generally include: upper left corner, lower left corner, upper right corner, and lower right corner. As shown in FIG. 3, the position information of the sub-window is the lower right corner. The sub-window size information may generally include: small, medium, and large. However, no matter how the sub-window size is set, it may not exceed the size of the main window. For example, the position information of the sub-window may be determined through ***Position*** option of ***ControlService*** or similar functions, and the size information of the sub-window may be determined through ***Size*** option of ***ControlService*** or similar functions.

In this way, when the split-screen mode is the PIP mode, after receiving the split-screen display instruction, the display may automatically divide the sub-windows into corresponding sizes based on the sub-window size information and sub-window position information, and arrange the sub-windows in corresponding positions. It is understandable that in practice, the position information and size information of the sub-window may be manually input (for example, the corresponding vertex coordinates) as needed, or the sub-window size, size and position may be manually adjusted after the sub-window division is completed, so that the sub-window setting is more free and more adapted to user needs.

In a possible embodiment, the method further includes:
receiving a focus switching instruction; and
switching the main window or the sub-window as a target window based on the focus switching instruction.

The window where the focus is located refers to a target window on which the user may currently perform relevant operations and interactions, for example, it may be a sub-window or a main window. Usually, when the display windows of a display complete the split screen, in the absence of specific settings, the default focus is on the main window, that is, the main window is the target window. The focus switching instruction may be transmitted via a remote control device. For example, the focus switching instruction may be determined through ***Switch*** option or a similar function of ***ControlService.***

After receiving the focus switching instruction, the display may obtain the target window contained in the focus switching instruction, and then switch the target window through ***setFocusedStack*** of ***AMS*** (Activity ManagerService) of ***ControlService.*** If the target window is the main window, when the display receives the focus switching instruction, the display may switch the target window to a sub-window through ***setFocusedStack*** of AMS of ***ControlService.*** Specifically, ***ControlService*** may transmit a focus switching instruction of "remove the focus of the main window and trigger the focus of the sub-window" to the main window. After receiving the instruction, the main window removes the focus of the window and transmits the control instruction to the sub-window, and the sub-window triggers the focus. If the target window is a sub-window, when the display receives a focus switching instruction, the display may switch the target window to the main window through ***setFocusedStack*** of AMS of ***ControlService.*** For example, ***ControlService*** may transmit a focus switching instruction of "remove the focus of the sub-window and trigger the focus of the main window" to the main window. After receiving the instruction, the main window triggers the focus of the window and transmits the control instruction to the sub-window, and the sub-window removes the focus.

In this way, after receiving the focus switching instruction, the display may freely switch the target window based on the focus switching instruction, thereby facilitating the user to operate and process the content in the target window.

In a possible embodiment, the method further includes:
receiving a display switching instruction; and
switching a target data source of the sub-window based on the display switching instruction.

For example, as described above, the sub-window may be the external data channel window of the display or the internal data channel window of the display, that is, the data source of the sub-window may come from an external terminal device (external data) or from an application program inside the display (internal data). In addition, in actual applications, the display may also be connected to multiple terminal devices. Therefore, the target data source of the sub-window may be switched by display switching instructions, so that the sub-window can display the content required by the user as needed. The display switching instruction may be transmitted via a remote control device.

For example, the display switching instruction may be determined through ***Input*** option or a similar function of ***ControlService.*** After receiving the display switching instruction, the display may obtain the target data source information contained in the display switching instruction, and then close the current data source of the sub-window through ***ControlService,*** and then start the target data source in the sub-window. If the current data source of the sub-window is internal data and the target data source is external data, the sub-window closes the current application and displays the content of the external terminal device in the sub-window; if the current data source of the sub-window is external data and the target data source is internal data, the sub-window closes the content of the currently displayed external terminal device, starts the application corresponding to the target data source and displays it in the sub-window; if the current data source of the sub-window is external data and the target data source is another external data, the sub-window closes the content of the currently displayed external terminal device, starts and displays the content of another external terminal device.

In this way, the user may switch the content displayed in the sub-window at any time according to needs during the split-screen display, which is conducive to the alternating display of different content in complex scenes.

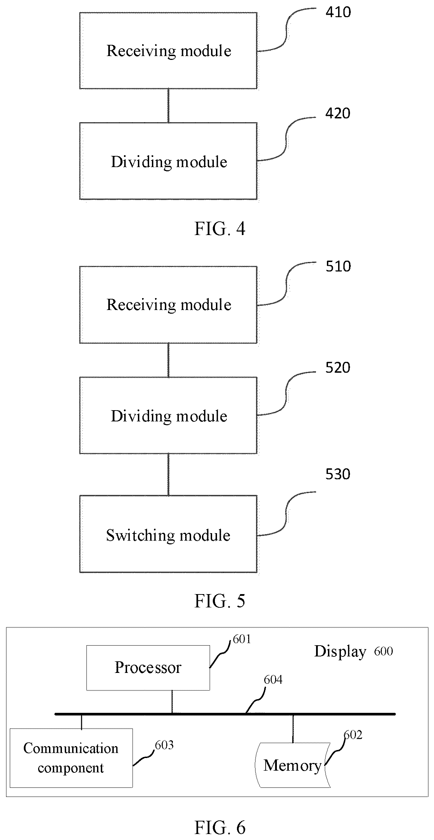

In this embodiment, a split-screen display apparatus is provided. FIG. 4 is a block diagram of a split-screen display apparatus according to an embodiment of the present disclosure. As shown in FIG. 4, the apparatus may include:
a receiving module 410 configured to receive a split-screen display instruction, where the split-screen display instruction includes split-screen mode information and display information, the display information is used to determine a data source of content displayed in a sub-window; and
a dividing module 420 configured to divide a display window into a main window and a sub-window based on the split-screen display instruction, where the main window includes an internal data channel window of a display, and the sub-window includes an external data channel window of the display.

Optionally, the sub-window further includes the internal data channel window of the display.

Optionally, the split-screen display instruction further includes: audio source information;
taking an audio source of the main window or the sub-window as an output audio source based on the audio source information

Optionally, the split-screen mode information includes a PBP mode and a PIP mode;
the dividing module 420 is further configured to divide evenly the display window into a main window and a sub-window when the split-screen mode information is the PBP mode, where the main window has a same size as the sub-window;
the dividing module 420 is further configured to divide the display window into a main window and a sub-window when the split-screen mode information is the PIP mode, where the main window has a different size from the sub-window, and the size of the main window is larger than the size of the sub-window.

Optionally, when the split-screen mode information is the PIP mode, the split-screen display instruction further includes: sub-window size information and sub-window position information;
the dividing module 420 is further configured to determine a size of the sub-window based on the sub-window size information;
the dividing module 420 is further configured to determine a position of the sub-window based on the sub-window position information.

As shown in FIG. 5, the apparatus further includes:
a receiving module 510 further configured to receive a focus switching instruction; and
a switching module 530 configured to switch the main window or the sub-window as a target window based on the focus switching instruction.

Optionally, the apparatus further includes:
the receiving module 510 further configured to receive a display switching instruction; and
the switching module 530 further configured to switch a target data source of the sub-window based on the display switching instruction.

FIG. 6 is a schematic diagram of a structure of a display according to an embodiment of the present disclosure. As shown in FIG. 6, the display 600 includes:
a processor 601 and a memory 602;
the memory 602 stores computer instructions;
the processor 601 executes the computer instructions stored in the memory 602, so that the processor 601 performs the above-mentioned split-screen display method.

The specific implementation process of the processor 601 may be referred to the above method embodiment, and its implementation principle and technical effect are similar, so this embodiment will not be repeated here.

Optionally, the display 600 further includes a communication component 603. The processor 601, the memory 602 and the communication component 603 may be connected via a bus 604.

The embodiment of the present disclosure further provides a terminal device, including: the above-mentioned display 600.

An embodiment of the present disclosure further provides a computer-readable storage medium, in which computer instructions are stored. When the computer instructions are executed by a processor, the computer instructions are used to perform the above-mentioned split-screen display method.

Other embodiments of the present disclosure will be apparent to those skilled in the art from consideration of the description and practice of the present disclosure disclosed herein. The present disclosure is intended to cover any modifications, uses or adaptations of the present disclosure, which follow the general principles of the present disclosure and include common knowledge or customary technical means in the technical field that are not disclosed in the present disclosure. It is intended that the description and examples be considered as exemplary only, with a true scope and spirit of the invention being indicated by the following claims.

It should be understood that the present disclosure is not limited to the exact construction that has been described above and shown in the drawings, and that various modifications and changes may be made without departing from the scope thereof. The scope of the present disclosure is limited only by the attached claims.

## Claims

1. A split-screen display method, **characterized in that** the method comprises:
receiving a split-screen display instruction, wherein the split-screen display instruction comprises split-screen mode information and display information, the display information is used to determine a data source of content displayed in a sub-window; and
dividing a display window into a main window and a sub-window based on the split-screen display instruction, wherein the main window comprises an internal data channel window of a display, and the sub-window comprises an external data channel window of the display.

2. The method of claim 1, **characterized in that** the sub-window further comprises the internal data channel window of the display.

3. The method of claim 1, **characterized in that** the split-screen display instruction further comprises audio source information;
taking an audio source of the main window or the sub-window as an output audio source based on the audio source information.

4. The method of claim 1, **characterized in that** the split-screen mode information comprises a PBP mode and a **PIP** mode;
dividing evenly the display window into the main window and the sub-window when the split-screen mode information is the PBP mode, wherein the main window has a same size as the sub-window; and
dividing the display window into the main window and the sub-window when the split-screen mode information is the PIP mode, wherein the main window has a different size from the sub-window, and the size of the main window is larger than the size of the sub-window.

5. The method of claim 4, **characterized in that** when the split-screen mode information is the PIP mode, the split-screen display instruction further comprises sub-window size information and sub-window position information;
determining a size of the sub-window based on the sub-window size information; and
determining a position of the sub-window based on the sub-window position information.

6. The method of claim 1, **characterized in that** the method further comprises:
receiving a focus switching instruction; and
switching the main window or the sub-window as a target window based on the focus switching instruction.

7. The method of claim 1, **characterized in that** the method further comprises:
receiving a display switching instruction; and
switching a target data source of the sub-window based on the display switching instruction.

8. A split-screen display apparatus, **characterized in that** the apparatus comprises:
a receiving module configured to receive a split-screen display instruction, wherein the split-screen display instruction comprises split-screen mode information and display information, the display information is used to determine a data source of content displayed in a sub-window; and
a dividing module configured to divide a display window into a main window and a sub-window based on the split-screen display instruction, wherein the main window comprises an internal data channel window of a display, and the sub-window comprises an external data channel window of the display.

9. A display, comprising: a processor; and a memory storing a computer program that is executable by the processor, **characterized in that** the computer program, when executed by the processor, causes the display to perform the method of any one of claims 1-7.

10. A terminal device, comprising the display of claim 9.

11. A computer-readable storage medium storing computer instructions, **characterized in that** the computer instructions, when executed by a processor, perform the method of any one of claims 1-7.
